# EUROPEAN PATENT SPECIFICATION

(11) **EP 2 816 228 B1**
(45) Date of publication and mention of the grant of the patent: **30.12.2020**
(21) Application number: 14173152.1
(22) Date of filing: 19.06.2014
(51) Int. Cl.: F03G 7/06

(54) **Oscillating shaft actuators**
Oszillierende Wellenaktuatoren
Actionneurs d'arbre oscillant

(30) Priority: 20.06.2013 US 201313922576
(43) Date of publication of application: 24.12.2014
(73) Proprietor: Simmonds Precision Products, Inc., Vergennes, VT 05491 (US)
(72) Inventor: Buttolph, Martin E., Middlebury, VT Vermont 05753 (US)
(74) Representative: Dehns

(56) References cited:
- EP-A2- 0 574 022
- EP-A2- 2 333 334
- WO-A1-2012/113398
- WO-A2-2011/141183

## Description

The present invention relates to actuation, and more particularly to rotational actuation, for example to turn a shaft about its axis.

A variety of devices are known for actuation. For example, servos, stepper motors, hydraulic or pneumatic pistons, and associated linkages and gears can be used to provide actuation for rotating, pivoting, sliding, and the like. A typical servo, for example, includes a motor, a gear reduction system, and sensors with associated circuitry for feedback control of the motor.

As there is pressure to make products smaller and less expensive, there is an ever present desire to make actuators more simple, compact, and at lower cost. The aerospace industry is one example where size, cost, and complexity are very important. One exemplary actuator, disclosed in U.S. Patent No. 4,761,955 to Bloch, uses a shape memory alloy wire wound through six sets of pulleys of a rotary accumulator as the basis for an actuator. EP 2 333 334 A2, WO 2011/141183 A2, WO 2012/113398 A1, and EP 0 574 022 A2 disclose actuators comprising shape memory alloys.

Such conventional methods and systems have generally been considered satisfactory for their intended purpose. However, there is still a need in the art for actuators that allow for improved simplicity, size, cost, and the like. There also remains a need in the art for such actuators that are easy to make and use. The present invention provides a solution for these problems.

The invention provides an actuator comprising: a drum defining a longitudinal axis and having axially opposed first and second end portions that are rotatable relative to one another about the longitudinal axis; and a shape memory element wrapped around the drum and extending from the first end portion of the drum to the second end portion of the drum to actuate relative rotation of the first and second end portions of the drum about the longitudinal axis by activation of the shape memory element; characterised in that the first and second end portions of the drum are connected to one another by an annular flexible drum portion with slots defined therethrough, wherein the slots are aligned in a generally axial direction, and are oblique relative to the axial direction when the actuator is in a relaxed state so as to counteract axial shortening of the drum during actuation.

The first and second end portions of the drum are connected to one another by a torsionally flexible drum portion. The flexible drum portion can include a composite material that provides for a torsionally compliant, radially rigid drum portion. The torsional flexibility of the drum can be chosen by material selection and by the presence of cutouts or slots in the drum. The flexible drum portion is annular with slots as required defined therethrough, wherein the slots are aligned in a generally axial direction to lower the torsional rigidity of the drum. Each slot may be defined between respective axial strips of the annular flexible drum portion. The strips may be configured and adapted to flex progressively in the angular (torsion) direction between the first and second end portions of the drum under force of the shape memory element when activated and to resiliently bias against the shape memory element to return the drum to a relaxed state when the shape memory element is deactivated. The drum can include a stop to provide bias torque in the drum for reverse actuation of the drum with the shape memory element deactivated. The strips can advantageously be stiff in the radial direction to resist the constricting force of the wound shape memory element.

The second end portion of the drum can include a splined output flange, or any attachment arrangement suitable for the transmission of the rotational torque and motion.

These and other features of the systems and methods of the subject invention will become more readily apparent to those skilled in the art from the following detailed description of the preferred embodiments taken in conjunction with the drawings.

So that those skilled in the art will readily understand how to make and use the devices and methods of the subject disclosure without undue experimentation, a preferred embodiment thereof will be described in detail herein below by way of example only and with reference to a certain figure, wherein:

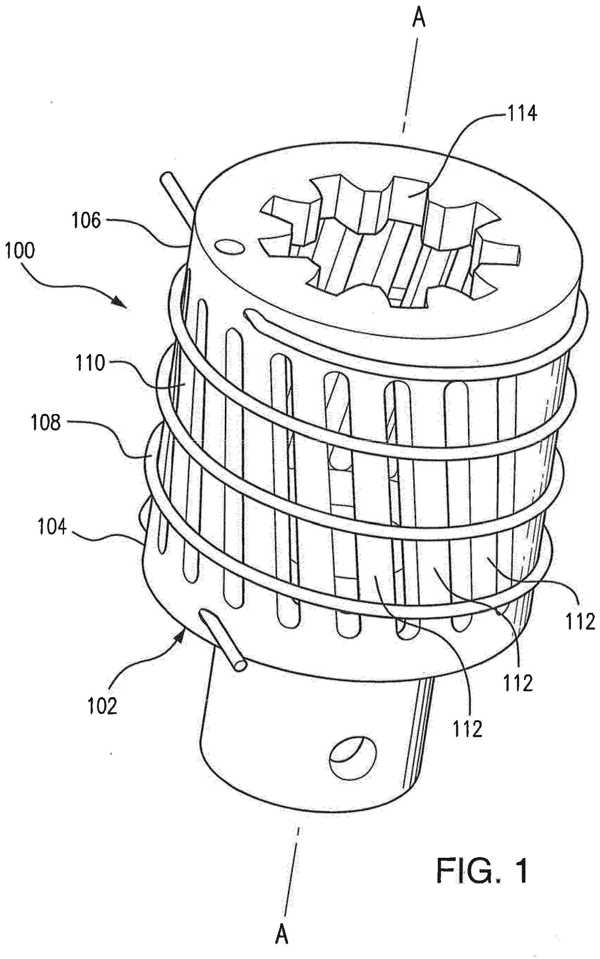

Fig. 1 is a schematic perspective view of an exemplary embodiment of an actuator, showing the shape memory element wrapping around the flexible annular drum portion.

Reference will now be made to the drawings wherein like reference numerals identify similar structural features or aspects of the subject invention. For purposes of explanation and illustration, and not limitation, a partial view of an exemplary embodiment of an actuator in is shown in Fig. 1 and is designated generally by reference character 100. The systems described herein can be used to provide rotational actuation, for example oscillatory actuation about the axis of a shaft.

Actuator 100 includes a drum 102 defining a longitudinal axis A and having a first end portion 104 axially opposed to a second end portion 106. End portions 104 and 106 are rotatable relative to one another about the longitudinal axis A. A shape memory element 108 is wrapped around drum 102 and extends from first end portion 104 to second end portion 106. This allows element 108 to actuate or drive relative rotation of the first and second end portions 104 and 106 about longitudinal axis A by activation of the shape memory element 108. Element 108 can be of any suitable shape memory alloy or material such as Nitinol, and can be activated, for example by applying a voltage across its respective ends to provide heat for the shape memory effect shortening element 108.

With continued reference to Fig. 1, first and second end portions 104 and 106 are connected to one another by a flexible annular drum portion 110. In this embodiment, portion 110 has slots defined therethrough, wherein the slots are aligned in a generally axial direction. Some obliqueness in the slots relative to the axial direction may be desirable in the relaxed state for certain applications to counteract axial shortening of the drum that can occur during actuation. Each slot is defined between respective axial strips 112 of portion 110. The strips 112 are configured and adapted to flex progressively between the first and second end portions 104 and 106 under force of the shape memory element 108 when activated. In their flexed state, strips 112 resiliently bias against the shape memory element 108, and can return toward a relaxed state when the shape memory element 108 deactivates. The strips 112 are configured to provide a sufficient return torque to restretch element 108 and provide any extra torque needed to provide actuation torque in the return direction. Some remaining bias can be expected to match the yield strength of the element 108. Even more bias can be included so there is useable torque available at the (return) end of travel - in this case the actuator could include a rotation stop, so this remaining torsional bias does not continue to stretch element 108 beyond its design limits. Thus activating and deactivating element 108, e.g., by switching an electrical current through element 108 on and off, can actuate drum 102 back and forth around axis A. End portion 106 includes a splined output flange 114.

The actuation of the element 108 shortens the wrapped element 108 and would simply constrict or radially squeeze the drum, however if the drum is sufficiently rigid to resist this radial squeezing, then the secondary effect is an induced twisting of the second end of the drum relative to the first end. The twisting effect is the intended and desirable result of this configuration. Drum 102 can be made of a composite material that provides for a torsionally complaint, radially rigid drum portion. It should be noted that the tangential location of any portion of element 108 moves progressively more the farther it is from the grounded end of the actuator drum. The embodiments described herein afford a means for the progressively greater tangential motion of the shape memory element along the length and circumference of the drum.

Drum 102 is configured and adapted to provide proportionally greater travel in a direction along the longitudinal axis for element 108 as element 108 is actuated around drum 102, e.g., to reduce relative motion locally between drum 102 and element 108. This can also be accomplished in other ways.

The exemplary actuator embodiment described above includes means for accommodating progressive movement of the shape memory element along the respective drum. For example, if a shape memory element such as Nitinol is used, it can be pre-stretched. When activated by applying a voltage across the element, it will shrink by about 10% in length. If one end of the drum is held stationary, the opposite end will experience full motion, but the intermediate portions of the drum will undergo proportionally less motion, to match the motion of the shape memory element as it grows and shrinks. This reduces friction or binding between the surface of the drum and the shape memory element.

Fig. 1 shows element 108 having four coils around drum 102. Those skilled in the art will readily appreciate that this is only exemplary. Greater numbers of coils in the shape memory element will result in greater angular movement of the actuator. So actuators can be designed for specific applications with any suitable number of coils to achieve the desired angular travel.

While shown and described in the exemplary context of having the shape memory element wrapped around the outside of the drum, those skilled in the art will readily appreciate that the shape memory element can readily be wrapped around within the drum or inside of the drum, if suitably retained, without departing from the scope of this disclosure. Additionally, while shown and described in the exemplary context of having a single wire, constant diameter type shape memory element, those skilled in the art will readily appreciate that multiple shape memory elements, multi-stranded elements, and non-constant cross-sectional elements can all be tailored to provide a specific torque for a given application without departing from the scope of this disclosure. The response time of the actuators described herein can be increased by enhancing the heat transfer to the shape memory elements.

The methods and systems, as described above and shown in the drawings, provide for actuators with superior properties including for example, simplicity, size, cost, and the like. While the apparatus and methods of the subject disclosure have been shown and described with reference to preferred embodiments, those skilled in the art will readily appreciate that changes and/or modifications may be made thereto without departing from the scope of the subject disclosure, that is defined by the appended claims.

## Claims

1. An actuator (100) comprising:
a drum (102) defining a longitudinal axis (A) and having axially opposed first (104) and second (106) end portions that are rotatable relative to one another about the longitudinal axis; and
a shape memory element (108) wrapped around the drum and extending from the first end portion of the drum to the second end portion of the drum to actuate relative rotation of the first and second end portions of the drum about the longitudinal axis by activation of the shape memory element;
**characterised in that** the first (104) and second (106) end portions of the drum (102) are connected to one another by an annular flexible drum portion (110) with slots defined therethrough, wherein the slots are aligned in a generally axial direction, and are oblique relative to the axial direction when the actuator is in a relaxed state so as to counteract axial shortening of the drum during actuation.

2. An actuator (100) as recited in claim 1, wherein each slot is defined between respective axial strips (112) of the annular flexible drum portion (110), wherein the strips are configured and adapted to flex progressively between the first (104) and second (106) end portions of the drum (102) under force of the shape memory element (108) when activated and to resiliently bias against the shape memory element to return to a more relaxed state with the shape memory element deactivated.

3. An actuator (100) as recited in any preceding claim, wherein the second end portion (106) includes an attachment for transmission of the rotational torque and motion.

4. An actuator (100) as recited in any of claims 1 to 3, wherein the second end portion includes a splined output flange (114).

5. An actuator (100) as recited in any preceding claim, wherein the drum (102) is configured and adapted to provide proportionally greater travel in a direction along the longitudinal axis (A) for the shape memory element (102) as the shape memory element is actuated around the drum.

6. An actuator (100) as recited in any of claims 1 or 2, wherein the annular flexible drum portion (110) comprises a composite material that provides for a torsionally flexible, radially rigid drum portion.

7. An actuator (100) as recited in any preceding claim, wherein the drum (102) includes at least one stop to provide bias torque in the drum for reverse actuation of the drum with the shape memory element (108) deactivated.

## Patentansprüche

1. Aktuator (100), umfassend:
einen Zylinder (102), der eine Längsachse (A) definiert und einen axialen ersten (104) und zweiten (106) Endabschnitt, die sich gegenüberliegen, aufweist, die relativ zueinander um die Längsachse drehbar sind; und
ein Formgedächtniselement (108), das um den Zylinder gewickelt ist und sich von dem ersten Endabschnitt des Zylinders zu dem zweiten Endabschnitt des Zylinders erstreckt, um eine relative Drehung des ersten und des zweiten Endabschnitts des Zylinders um die Längsachse durch Aktivierung des Formgedächtniselements zu betätigen;
**dadurch gekennzeichnet, dass** der erste (104) und der zweite (106) Endabschnitt des Zylinders (102) miteinander durch einen ringförmigen flexiblen Zylinderabschnitt (110) mit Schlitzen, die dadurch definiert sind, verbunden sind, wobei die Schlitze in einer im Allgemeinen axialen Richtung ausgerichtet sind und schrägt relativ zur axialen Richtung sind, wenn sich der Aktuator in einem entspannten Zustand befindet, um einer axialen Verkürzung des Zylinders während der Betätigung entgegenzuwirken.

2. Aktuator (100) nach Anspruch 1, wobei jeder Schlitz zwischen jeweiligen axialen Stegen (112) des ringförmigen flexiblen Zylinderabschnitts (110) definiert ist, wobei die Stege so konfiguriert und ausgelegt sind, dass sie sich schrittweise zwischen dem ersten (104) und dem zweiten (106) Endabschnitt des Zylinders (102) unter der Kraft des Formgedächtniselements (108) biegen, wenn es aktiviert wird, und sich elastisch gegen das Formgedächtniselement vorspannen, um zu einem entspannteren Zustand zurückzukehren, wenn das Formgedächtniselement deaktiviert wird.

3. Aktuator (100) nach einem der vorstehenden Ansprüche, wobei der zweite Endabschnitt (106) eine Befestigung zur Übertragung des Drehmoments und der Drehbewegung beinhaltet.

4. Aktuator (100) nach einem der Ansprüche 1 bis 3, wobei der zweite Endabschnitt einen gekerbten Ausgangsflansch (114) beinhaltet.

5. Aktuator (100) nach einem der vorstehenden Ansprüche, wobei der Zylinder (102) so konfiguriert und ausgelegt ist, dass er eine proportional größere Bewegung in einer Richtung entlang der Längsachse (A) für das Formgedächtniselement (102) bereitstellt, wenn das Formgedächtniselement um den Zylinder betätigt wird.

6. Aktuator (100) nach einem der Ansprüche 1 oder 2, wobei der ringförmige flexible Zylinderabschnitt (110) ein Verbundwerkstoffmaterial umfasst, das einen torsionsweichen, radialstarren Zylinderabschnitt bereitstellt.

7. Aktuator (100) nach einem der vorstehenden Ansprüche, wobei der Zylinder (102) mindestens einen Anschlag beinhaltet, um ein Vorspanndrehmoment in dem Zylinder zur entgegengesetzten Betätigung des Zylinders bereitzustellen, wenn das Formgedächtniselement (108) deaktiviert wird.

## Revendications

1. Actionneur (100) comprenant :
un tambour (102) définissant un axe longitudinal (A) et ayant des première (104) et seconde (106) parties d'extrémité axialement opposées qui sont rotatives l'une par rapport à l'autre autour de l'axe longitudinal ; et
un élément à mémoire de forme (108) enroulé autour du tambour et s'étendant de la première partie d'extrémité du tambour à la seconde partie d'extrémité du tambour pour actionner la rotation relative des première et seconde parties d'extrémité du tambour autour de l'axe longitudinal par activation de l'élément à mémoire de forme ;
**caractérisé en ce que** les première (104) et seconde (106) parties d'extrémité du tambour (102) sont reliées l'une à l'autre par une partie de tambour flexible annulaire (110) avec des fentes définies à travers celle-ci, dans lequel les fentes sont alignées dans une direction généralement axiale, et sont obliques par rapport à la direction axiale lorsque l'actionneur est dans un état relâché de manière à contrebalancer le raccourcissement axial du tambour lors de l'actionnement.

2. Actionneur (100) selon la revendication 1, dans lequel chaque fente est définie entre les bandes axiales respectives (112) de la partie de tambour flexible annulaire (110), dans lequel les bandes sont conçues et adaptées pour fléchir progressivement entre les première (104) et seconde (106) parties d'extrémité du tambour (102) sous la force de l'élément à mémoire de forme (108) lors de son activation et pour solliciter élastiquement contre l'élément à mémoire de forme afin de revenir à un état plus détendu avec l'élément à mémoire de forme désactivé.

3. Actionneur (100) selon une quelconque revendication précédente, dans lequel la seconde partie d'extrémité (106) comporte une fixation pour la transmission du couple de rotation et du mouvement.

4. Actionneur (100) selon l'une quelconque des revendications 1 à 3, dans lequel la seconde partie d'extrémité comporte une bride de sortie cannelée (114).

5. Actionneur (100) selon une quelconque revendication précédente, dans lequel le tambour (102) est conçu et adapté pour fournir un déplacement proportionnellement plus grand dans une direction le long de l'axe longitudinal (A) pour l'élément à mémoire de forme (102) alors que l'élément à mémoire de forme est actionné autour du tambour.

6. Actionneur (100) selon l'une quelconque des revendications 1 ou 2, dans lequel la partie de tambour flexible annulaire (110) comprend un matériau composite qui fournit une partie de tambour radialement rigide flexible en torsion.

7. Actionneur (100) selon une quelconque revendication précédente, dans lequel le tambour (102) comporte au moins une butée pour fournir un couple de sollicitation dans le tambour pour un actionnement inverse du tambour avec l'élément à mémoire de forme (108) désactivé.
